# EUROPEAN PATENT APPLICATION

(11) **EP 2 228 710 A1**
(43) Date of publication of application: **15.09.2010**
(21) Application number: 09003556.9
(22) Date of filing: 11.03.2009
(51) Int. Cl.: G06F 3/045, G06F 3/041

(54) **Method for protecting resistive touch panel and computer readable storage medium and electronic device thereof**

(71) Applicant: Giga-Byte Technology Co., Ltd., Taipei (TW)
(72) Inventor: Chao, Ching-Hung, Taipei County (TW)
(74) Representative: Brandenburger, Karin

(57) **Abstract**

A method for protecting a resistive touch panel includes determining if a touch event has happened on the resistive touch panel: if it is determined that a touch event has happened, detecting an analog change of resistance between an upper substrate and a lower substrate of the resistive touch panel: converting the analog change of resistance to a digital pressure value; determining if the digital pressure value is greater than a predetermined threshold value; if the digital pressure value is greater than a predetermined threshold value, generating a warning window; and displaying the warning window through the resistive touch panel.

## Description

### BACKGROUND

### 1. Field of the Invention

The present invention relates to a protecting mechanism for a touch panel, and more particularly to a method for protecting a resistive touch panel and an electronic apparatus implementing the method.

### 2. Description of related art

Many electronic apparatuses such as PDAs (personal digital assistances), mobile phones and notebook computers are equipped with touch panels nowadays and thereby providing Improved convenience in using them. Among many types of touch panels, resistive touch panels allow a user to input command with all kinds of objects such as a stylus, a finger, a business card and etc., and offer a high accuracy in touched-position detection and quick response. As a result, resistive touch panels have gain substantial popularity in the market.

Conventional electronic apparatuses using touch panels usually do not have any mechanism for detecting the touching pressure on the touch panel. If a user improperly pushes the touch panel with a pressure higher than the maximum pressure that the touch panel can bear, for example, 3H hardness units, either momentarily or for a long time, the resistive touch panel may be permanently damaged.

### BRIEF SUMMARY

The present invention relates to a method for protecting a resistive touch panel, whereby when a user improperly pushes the touch panel with a pressure higher than the maximum pressure that the touch panel can bear, a warning window is generated to notify the user of the Improper operation.

An embodiment of the present invention provides a method for protecting a resistive touch panel. The method includes determining if a touch event has happened on the resistive touch panel; If it is determined that a touch event has happened, detecting an analog change of resistance between an upper substrate and a lower substrate of the resistive touch panel; converting the analog change of resistance to a digital pressure value; determining if the digital pressure value is greater than a predetermined threshold value; If the digital pressure value is greater than a predetermined threshold value, generating a warning window: and displaying the warning window through the resistive touch panel.

Another embodiment of the present invention provides a computer-readable storage medium for storing a computer program and loading the computer program to a computer system, wherein the above-mentioned method is implemented by the computer system when the computer system executes the program.

Yet another embodiment of the present invention provides an electronic apparatus that includes a resistive touch panel and a processing module electrically connected to the resistive touch panel. The processing module is configured for determining whether a touch event has happened on the resistive touch panel. When it is determined that a touched event has happened, the processing module is configured to detect an analog change of resistance between an upper substrate and a lower substrate of the resistive touch panel, to convert the analog change of resistance to a digital pressure value, and to determine if the digital pressure value Is greater than a predetermined threshold value. When the digital pressure value is determined to be greater than the predetermined threshold value, the processing module is configured to generate a warning window and display the warning window through the resistive touch panel.

In the above embodiments, when a user improperly pushes the touch panel with a pressure higher than the maximum pressure that the touch panel can bear, a warning window is generated to notify the user of the improper operation, from which the user knows he must change the way he operates the resistive touch panel so as to prevent the touch panel from being damaged and thereby improve the lifetime of the touch panel.

### BRIEF DESCRIPTION OF THE DRAWINGS

These and other features and advantages of the various embodiments disclosed herein will be better understood with respect to the following description and drawings, in which like numbers refer to like parts throughout, and in which:

FIG. 1 is a schematic view of an electronic apparatus according to an embodiment of the present invention;

FIG. 2 is a flow chart illustrating a method for protecting a resistive touch panel according to another embodiment of the present invention.

### DETAILED DESCRIPTION

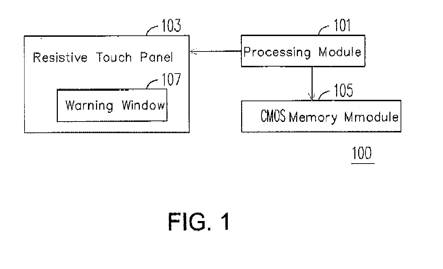

Referring to FIG. 1, an electronic apparatus 100 according to an embodiment of the present Invention Is provided. The electronic apparatus 100 can be but not limited to a notebook computer, a personal digital assistant (PDA), or a cell phone. The electronic apparatus 100 includes a processing module 101, a resistive touch panel 103 electrically connected to the processing module 101 and a memory module 105. The memory module 105 can be, for example, a CMOS (complementary metal-oxide-semiconductor) memory module 105.

In this embodiment, the maximum pressure the resistive touch panel 103 can bear is 3H hardness unit, which means the resistance variance between an upper substrate and a lower substrate (not shown in FIG. 1) of the resistive touch panel 103 should not exceed 2 KΩ to keep the resistive touch panel 103 working properly. The memory module 105 stores a predetermined threshold value E0 and a total number of warning windows previously generated by the resistive touch panel 103. For illustration purposes, suppose this total number is 2.

The processing module 101 is configured to detect a touch on the resistive touch panel 103 by a finger, a stylus or some other object. Before such detection, the processing module 101 retrieves the predetermined threshold value E0 and the total number of previous warning windows, which is 2 in this embodiment, and stores the values in its internal cash (not shown in FIG. 1).

When the processing module 101 detects a touch on the resistive touch panel 103 by a finger, a stylus or some other object, the processing module 101 measures an analog change of resistance between the upper and lower substrates of the resistive touch panel 103, and converts the analog value to a digital value representing the pressure exerted by the detected touch. The processing module 101 further determines whether the digital pressure value is greater than the predetermined threshold value E0.

If the digital pressure value is greater than the predetermined threshold value E0, it means the change of resistance between the upper and lower substrates of the resistive touch panel 103 exceeds 2 KΩ, and the touch by the finger, the stylus or some other object exerts a pressure on the resistive touch panel 103 that exceeds the maximum pressure the resistive touch panel 103 can bear, which is 3H hardness units, and therefore such touch is identified as an improper operation with excessive touching pressure..

When the above situation happens, the processing module 101 immediately generates a warning window 107 and displays the warning window 107 through the resistive touch panel 103. The warning window 107 usually displays a warning message, for example, a message saying "Warning Excessive Touching Pressurel", so as to notify the user to change the way he operates the resistive touch panel 103 and thereby to prevent the resistive touch panel 103 from being permanently damaged and increase the lifetime of the resistive touch panel 103.

In addition, to avoid interfering with normal display of the resistive touch panel 103, after the warning window 107 is displayed for a predetermined time period, for example 3 seconds, the processing module 101 is configured to automatically close the warning window 107.

It is noted that If no touch is detected, that is, the user does not touch the resistive touch panel 103 with a finger, a stylus or some other object, the processing module does not generate the warning window 107. If the digital pressure value the processing module 101 gets through conversion is not greater than the predetermined threshold value E0, it means the analog change of resistance between the upper and lower substrates of the resistive touch panel 103 does not exceed 2 KΩ, and the touch by the finger, the stylus or some other object exerts a pressure on the resistive touch panel 103 that does not exceed the maximum pressure the resistive touch panel 103 can bear, which is 3H hardness units, and therefore this touch is a safe operation. Hence in the case, the processing module 101 does not generate the warning window 107 either.

To provide an evidence of erroneous operation by a user to the manufacturer of the electronic apparatus 100 in case the electronic apparatus 100 is sent back to the manufacture to be repaired, in this embodiment, when a warning window 107 is displayed, the processing module 101 stores the digital pressure value and the time the improper pressure corresponding to the warning window 107 occurs, for example, in a format of "month/date/year", in the memory module 105, increases the total number of warning windows previously stored in the memory module 105 (2 in this embodiment) by one and stores the resulted total number of warning windows after the increase (3 in the embodiment) in the memory module 105 replacing the old total number (2 in this embodiment) of warning windows 107 before the increase.

If the resistive touch panel 103 is not working properly and sent to the manufacturer of the electronic apparatus 100 by the user to be repaired, the manufacturer can read the information stored in the memory module 105, including the total number of warning windows that have been generated, so as to determine if the damage is caused by erroneous operation of the user on the resistive touch panel 103 and use such information as an evidence in the process of repairing the electronic apparatus 100.

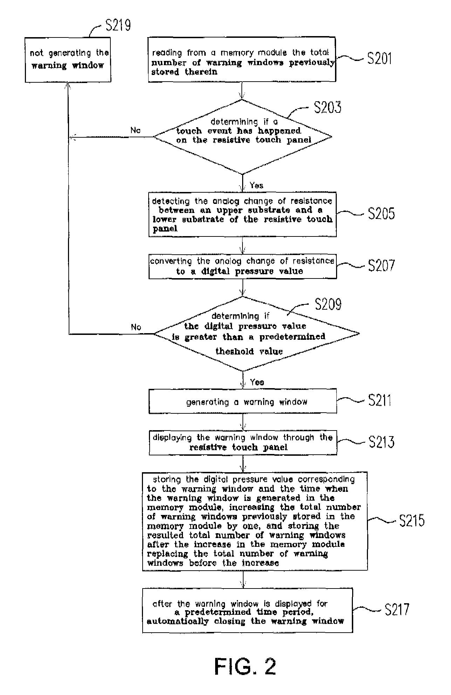

Referring to FIG. 2, a method for protecting a resistive touch panel according to another embodiment of the present invention is provided. The method includes: reading from a memory module the total number of warning windows previously stored therein (step S201) and determining if a touch event has happened on the resistive touch panel (step S203). The touch event happens when a user touches the resistive touch panel with a finger, a stylus, or some other object.

The method further includes that when it is determined that a touch event has happened, detecting the analog change of resistance between an upper substrate and a lower substrate of the resistive touch panel (step S205); converting the analog change of resistance to a digital pressure value (step S207); determining if the digital pressure value is greater than a predetermined threshold value (step S209); if the digital pressure value is greater than a predetermined threshold value, generating a warning window (step S211); and displaying the warning window through the resistive touch panel (step S213). The method further includes that if no touch event has happened or the digital pressure value is not greater than a predetermined threshold value, not generating the warning window (step S219).

In this embodiment, the method further includes that after displaying the warning window, storing the digital pressure value corresponding to the warning window and the time when the warning window is generated in the memory module, increasing the total number of warning windows previously stored in the memory module by one, and storing the resulted total number of warning windows after the increase in the memory module replacing the total number of warning windows before the increase (step S215). In addition, to avoid interfering with normal display of the resistive touch panel, the method further includes that after the warning window is displayed for a predetermined time period, automatically closing the warning window (step S217). It is noted there is no specific limitation regarding to the order between the step 215 and the step 217.

It is noted the above-mentioned method for protecting a resistive touch panel can be executed by a computer system. More specifically, the method can be implemented by a computer program, and the computer program can be stored In a computer-readable storage medium such as an optical disk or a hard disk. When the program is loaded to a computer system through the computer-readable storage medium, the computer system can execute the program, thereby implementing the method provided by the embodiment.

According to the above embodiments, when a user improperly pushes the touch panel with a pressure higher than the maximum pressure that the touch panel can bear, a warning window is generated to notify the user of the improper operation, from which the user knows he must change the way he operates the resistive touch panel so as to prevent the touch panel from being damaged and thereby improve the lifetime of the touch panel. In addition, the manufacturer of the electronic apparatus with the resistive touch panel can read information from the memory module so as to determine if the damaged to the electronic apparatus is caused by erroneous operation by the user and use such information as an evidence in the process of repairing the electronic apparatus.

The above description is given by way of example, and not limitation. Given the above disclosure, one skilled in the art could devise variations that are within the scope and spirit of the invention disclosed herein, including configurations ways of the recessed portions and materials and/or designs of the attaching structures. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. A method for protecting a resistive touch panel, comprising;
determining if a touch event has happened on the resistive touch panel;
If it is determined that the touch event has happened, detecting an analog change of resistance between an upper substrate and a lower substrate of the resistive touch panel;
converting the analog change of resistance to a digital pressure value; determining if the digital pressure value is greater than a predetermined threshold value;
if the digital pressure value is greater than the predetermined threshold value, generating a warning window; and
displaying the warning window through the resistive touch panel.

2. The method of claim 1, further comprising: before determining if a touch event has happened on the resistive touch panel, reading from a memory module the total number of warning windows that have been previously generated.

3. The method of claim 2, further comprising: after displaying the warning window, storing the digital pressure value corresponding to the warning window and the time when the warning window is generated in the memory module, increasing the total number of warning windows previously stored in the memory module by one and storing the resulted total number of warning windows after the increase in the memory module replacing the total number of warning windows before the increase.

4. The method of claim 1, further comprising: if it is determined that no touch event has happened or the digital pressure value is not greater than the predetermined threshold value, not generating the warning window.

5. The method of claim 1, further comprising: after the warning window is displayed for a predetermined time period, automatically closing the warning window.

6. A computer-readable storage medium for storing a computer program and loading the computer program to a computer system, wherein the method of claim 1 is implemented by the computer system when the computer system executes the program.

7. An electronic apparatus comprising:
a resistive touch panel; and
a processing module electrically connected to the resistive touch panel,
wherein the processing module is configured to determine whether a touch event has happened on the resistive touch panel, when it is determined that a touched event has happened, the processing module is configured to detect an analog change of resistance between an upper substrate and a lower substrate of the resistive touch panel, to convert the analog change of resistance to a digital pressure value, and to determine if the digital pressure value is greater than a predetermined threshold value, and when the digital pressure value is determined to be greater than the predetermined threshold value, the processing module is configured to generate a warning window and display the warning window through the resistive touch panel.

8. The electronic apparatus of claim 7, further comprising a memory module electrically connected to the processing module, the memory module being configured for storing the predetermined threshold value and the total number of warning windows that have been previously generated.

9. The electronic apparatus of claim 8, wherein the processing module is configured to read the total number of warning windows that have been previously generated before determining whether a touch event has happened on the resistive touch panel.

10. The electronic apparatus of claim 9, wherein the processing module is configured to, after the warning window Is displayed, store the digital pressure value corresponding to the warning window and the time when the warning window is generated in the memory module, to increase the total number of warning windows previously stored in the memory module by one and to store the resulted total number of warning windows after the increase in the memory module replacing the total number of warning windows before the increase.

11. The electronic apparatus of claim 8, wherein the memory module is a complementary metal-oxide-semiconductor memory module.

12. The electronic apparatus of claim 7, wherein if it is determined that no touch event has happened or the digital pressure value is not greater than a predetermined threshold value, the processing module is configured not to generate the warning window.

13. The electronic apparatus of claim 7, wherein the processing module is configured to close the warning window after displaying the warning window for a predetermined time period.

14. The electronic apparatus of claim 7, wherein the electronic apparatus includes a notebook computer, a personal digital assistance, or a mobile phone.
